# EUROPEAN PATENT APPLICATION

(11) **EP 1 672 196 A1**
(43) Date of publication of application: **21.06.2006**
(21) Application number: 04735336.2
(22) Date of filing: 28.05.2004
(51) Int. Cl.: F01P 11/10, F01P 5/06, B60K 11/04, E02F 9/00

(54) **CONSTRUCTION MACHINE ENGINE ROOM CONSTRUCTION AND CONSTRUCTION MACHINE COOLING DEVICE**

(30) Priority: 28.05.2003 JP 2003151518
(71) Applicant: Shin Caterpillar Mitsubishi Ltd., Tokyo 158-0097 (JP)
(72) Inventor: SHIGEMOTO, T., SHIN CATERPILLAR MITSUBISHI LTD, Tokyo 158-0097 (JP); SAKAI, M., SHIN CATERPILLAR MITSUBISHI LTD, Tokyo 158-0097 (JP); YAMADA, Kyoko, SHIN CATERPILLAR MITSUBISHI LTD, Tokyo 1580097 (JP)
(74) Representative: Klingseisen, Franz
(86) International application number: PCT/JP2004/007752
(87) International publication number: WO 2004/106709

(57) **Abstract**

The present invention relates to the engine room structure and cooling system in a construction machine. An introduction opening (22c) and discharge opening (22a) are formed in a wall surface (22) of the engine room (2B) . A cooling-air guiding member (31), formed on the outer surface of the wall, guides cooling air from a side opposite to the discharge opening (22a) to the introduction opening (22c) . The cooling of engine cooling water and pump working oil by a cooling package (24) is consequently performed effectively.

## Description

### TECHNICAL FIELD

The present invention relates to the engine room structure and cooling system of a construction machine.

### BACKGROUND ART

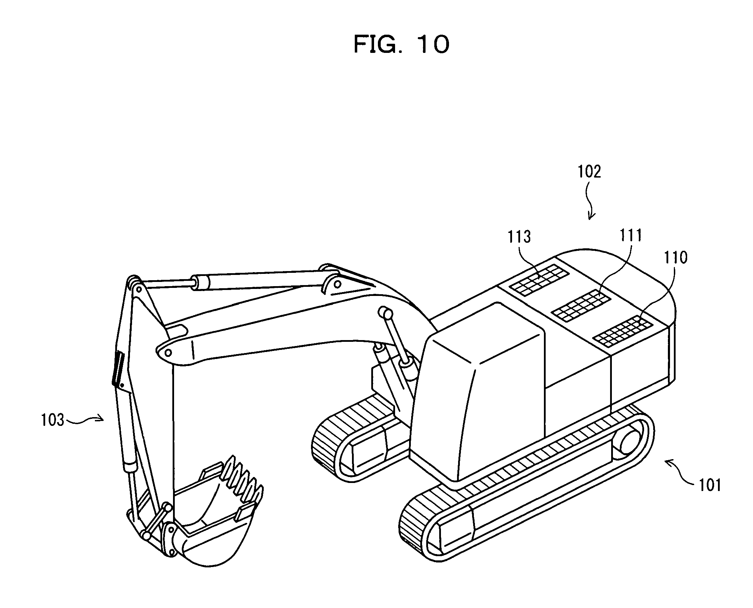

A wide variety of construction machines, such as travel construction machines (excavator, back hoe, hydraulic shovel and wheel loader, etc.), stationary construction machines (folk-lift, crane, etc.), etc. , are employed in various fields such as construction sites, harbors, factories, etc. For example, a hydraulic shovel, which is a travel construction machine, is made up of a travel base 101, a revolving superstructure 102 revolvably disposed on the travel base 101, and an operating arm 103 extending from the revolving superstructure 102 to perform various operations, as shown in Fig. 10.

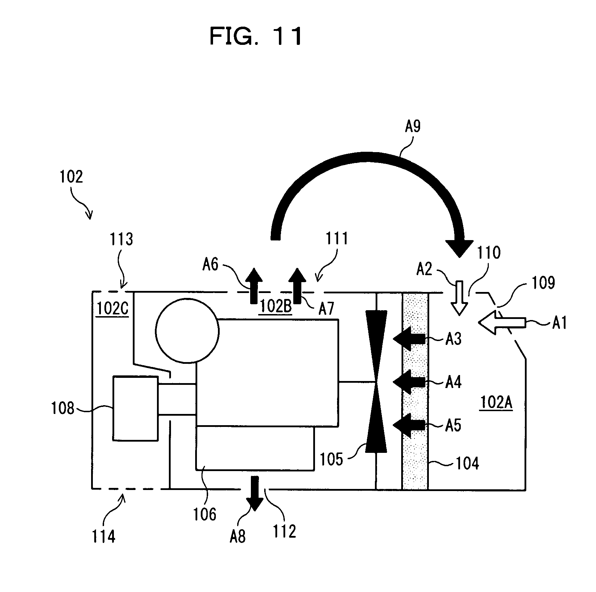

Now, the revolving superstructure 102 will be described with reference to Fig. 11 where the internal construction of a typical engine room is shown. As shown in the figure, the revolving superstructure 102 contains an engine 106, a hydraulic pump 108, etc. The operating arm 103 (see Fig. 10) is operated with the hydraulic pressure produced by the hydraulic pump 108 driven by the engine 106.

Construction machines are typically used in a severe environment, such as digging of stones and rocks in dams, tunnels, rivers, and roads, dismantling of buildings and structures, etc. In such an environment, the load exerted on the engine 106, hydraulic pump 108, and other components is high and can cause a rise in engine temperature or working-oil temperature. For this reason, in these construction machines, as shown in Fig. 11, a cooling package 104 consisting of a radiator or oil cooler of relatively large capacity is provided in the flow passage of the cooling air generated by the fan 105 driven with the engine 106. And with the cooling package 104, engine cooling water and working oil are cooled (e.g., see Japanese Laid-Open Utility Model Publication No. Hei 3-83324 (patent document 1)).

That is, with rotation of the fan 105, air (cooling air) is introduced through the upper openings (introduction openings) 109, 110 of a radiator room 102A in which the cooling package 104 is installed, as shown by arrows A1, A2. The cooling air cools the engine cooling water and working oil flowing through the cooling package 104 as it passes through the core of the cooling package 104 of fin structure, as indicated by arrows A3 to A5.

The air, cooling the engine cooling water and working oil and reaching a high temperature, is discharged out of the engine room through the discharge openings 111, 112 of the main engine room 102B, as indicated by arrows A6 to A8. The air also passes through the main engine room 102B and is discharged out of the engine room through the discharge openings 113, 114 of the pump room 102C.

Among the arrows A1 to A8 indicating the flow of the cooling air, the white arrows A1 and A2 indicate inhaled air flows into the cooling package 104, while the black arrows A3 to A8 indicate discharged air of relatively high temperature flows which have passed through the cooling package 104. Since the introduction opening 110 and discharge opening 111 are arranged relatively close to each other, the cooling air of relatively high temperature (hot air) after heat exchange with the cooling package 104, discharged through the discharge opening 111, will be drawn in the engine room through the introduction opening 110. (This will hereinafter be referred to as drawing-in of hot air.) That is, as indicated by an arrow A9 in Fig. 11, circulating flow will occur between the introduction opening 110 and discharge opening 111.

And if the drawing-in of hot air occurs, the temperature of the cooling air supplied to the cooling package 104 will become relatively high and therefore the cooling efficiency of the cooling package 104 will be reduced. As a result, there is a problem that the engine 106 will overheat easily. Also, if the heat exchange area (that is, area of a core of the cooling package 104) is increased to ensure cooling performance, there is another problem that the size of the cooling package 104 will be increased and consequently the size of the engine room will be increased.

If among the introduction and discharge openings 109 to 114 the introduction openings 109, 110 and/or discharge openings 111, 112 are provided not on the top surface of the engine room but on the side surface, circulating flow can be prevented from occurring between the introduction openings 109, 110 and discharge openings 111, 112, but when the introduction openings 109, 110 and/or discharge openings 111, 112 are provided on the side surface of the engine room, the flow of the cooling air in and out of the openings 109 to 112 and leakage of engine sound through these openings will have a direct influence on operators and passers around the construction machine. Thus, a new problem will be caused.

As a technique for preventing the drawing-in of hot air into the engine room, a construction machine such as that shown in Fig. 12 is disclosed in Japanese Laid-Open Patent Publication No. 2001-193102 (patent document 2) by way of example. In this construction machine, the top surface of an engine room 130 is provided with a cooling-air introduction opening 131, a cooling-air discharge duct 132, and cooling-air discharge openings 133, 134. As shown in the figure, the discharge opening 132a of the duct 132 and discharge openings 133 , 134 are disposed relatively away from the introduction opening 131 so that the drawing-in of hot air can be prevented. Particularly, hot air from the duct 132 is discharged in a direction away from the introduction opening 131, so this hot air is prevented from being drawn in the introduction opening 131.

However, in the technique of the aforementioned patent document 2 shown in Fig. 12, the introduction opening 131 and discharge openings 133, 134 are all open upward, so there is a problem that the drawing-in of hot air cannot be sufficiently suppressed. That is, the introduction opening 131 is disposed relatively away from the discharge openings 133 , 134, but since hot air is discharged upward from the discharge openings 133, 134, there is a possibility that circulating flow will occur between the introduction opening 131 through which air is introduced from above, and the discharge openings 133, 134.

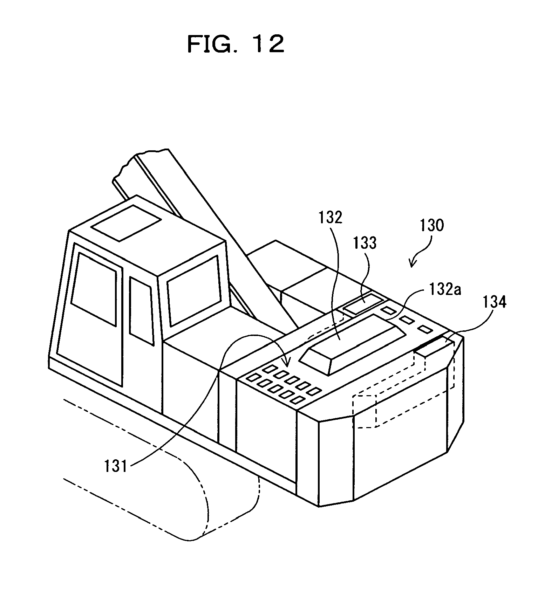

Particularly, in construction machines that have an engine in the revolving superstructure, as described above, if only the revolving superstructure is slightly revolved, hot air discharged upward will be easily inhaled again. That is, even if the introduction opening 131 and discharge openings 133 , 134 are spaced out at the opposite ends in the width direction of the construction machine and disposed, as shown in Fig. 12, the moving range of the introduction opening 131 and the moving range of the discharge openings 133, 134 will overlap each other by revolution of the revolving superstructure. As a result, cooling air (hot air) discharged upward from the discharge openings 133, 134 will be inhaled again through the introduction opening 131.

The present invention has been made in view of the problems and demands mentioned above. Accordingly, it is the object of the present invention to provide a cooling system of a construction machine that is capable of effectively cooling engine cooling water, pump working oil, etc.

### DISCLOSURE OF THE INVENTION

To achieve the aforementioned object of the present invention, there is provided an engine room structure of a construction machine which has an interior space functioning as a cooling-air passage, an introduction opening for introducing cooling air, and a discharge opening for discharging the cooling air. The engine room structure also contains a cooling package and a cooling fan for passing the cooling air through the cooling package. The engine room structure is provided with a cooling-air guiding member, which is mounted on a wall surface forming an engine room and used for guiding the cooling air to the introduction opening from a side opposite to the discharge opening with respect to an axial flow direction of the cooling fan.

Preferably, the cooling-air guiding member is mounted on the outer surface of the wall forming the engine room. In the engine room structure of the present invention, a rectifying plate is preferably provided along the axial flow direction between the cooling-air guiding member and the wall surface.

Preferably, the engine room structure of the present invention is further provided with a cooling-air deflecting member, mounted on the wall surface, for deflecting the cooling air discharged from the discharge opening, to a side opposite to the introduction opening with respect to the axial flow direction of the cooling fan.

In this case, a second rectifying plate is preferably provided along the axial flow direction between the cooling-air deflecting member and the wall surface.

In the engine room structure of the present invention, the discharge opening is preferably arranged at outer circumference of the cooling fan.

In accordance with the present invention, there is provided a cooling system in a construction machine which has a cooling-air passage formed as an interior space of an engine room, an introduction opening and discharge opening formed in a wall surface forming the engine room, a cooling package installed within the cooling-air passage, and a cooling fan installed between the introduction opening and the discharge opening for passing the cooling air through the cooling package. The cooling system is provided with a cooling-air guiding member, mounted on a wall surface forming the engine room, for guiding the cooling air to the introduction opening from a side opposite to the discharge opening with respect to an axial flow direction of the cooling fan.

In the cooling system of the present invention, it is preferable that a rectifying plate be provided along the axial flow direction between the cooling-air guiding member and the wall surface.

It is preferable that the cooling system of the present invention be further provided with a cooling-air deflecting member, mounted on the wall surface, for deflecting the cooling air discharged from the discharge opening, to a side opposite to the introduction opening with respect to the axial flow direction of the cooling fan.

In the cooling system of the present invention, it is preferable that a second rectifying plate be provided along the axial flow direction between the cooling-air deflecting member and the wall surface.

In the cooling system of the present invention, it is preferable that the discharge opening be arranged at outer circumference of the cooling fan.

According to the present invention, when cooling air is introduced into the cooling-air passage through the introduction opening formed in the wall surface of the engine room by operation of the cooling fan, the cooling air is guided to the introduction opening from a side opposite the discharge opening with respect to the axial flow direction of the cooling fan by the cooling-air guiding member mounted on the outside of the wall surface of the engine room. Therefore, the "drawing-in of hot air", in which the cooling air of relatively high temperature discharged from the discharge opening will be introduced into the cooling-air passage, can be prevented. And the cooling of engine cooling water and pump working oil by the cooling package can be effectively performed.

And by mounting the cooling-air deflecting member on the outer surface of the wall of the engine room, the cooling air of relatively high temperature after the cooling package is discharged from the cooling-air passage through the discharge opening and is then deflected to a side opposite to the introduction opening by the cooling-air deflecting member, so the drawing-in of hot air can be more effectively prevented.

### BRIEF DESCRIPTION OF THE DRAWINGS

FIG. 1 is a perspective view showing a construction machine to which a first embodiment of the present invention is applied;
FIG. 2 is a transverse sectional view showing a cooling system constructed in accordance with the first embodiment of the present invention, white arrows indicating the flow of air introduced and black arrows indicating the flow of hot air;
FIG. 3 is a perspective view showing the cooling-air introduction duct (cooling-air guiding member) of the cooling system constructed in accordance with the first embodiment of the present invention;
FIG. 4 is a side view showing the revolving superstructure of the construction machine shown in FIG. 1;
FIG. 5 is a perspective view showing a construction machine to which a second embodiment of the present invention is applied;
FIG. 6 is a transverse sectional view showing a cooling system constructed in accordance with the second embodiment of the present invention, white arrows indicating the flow of air introduced and black arrows indicating the flow of hot air;
FIG. 7 is a perspective view showing the cooling-air introduction duct (cooling-air guiding member) and discharge duct of the cooling system constructed in accordance with the second embodiment of the present invention;
FIG. 8 is a sectional view showing the essential part of an engine room constructed in accordance with a modification of the second embodiment of the present invention, white arrows indicating the flow of air introduced and black arrows indicating the flow of hot air;

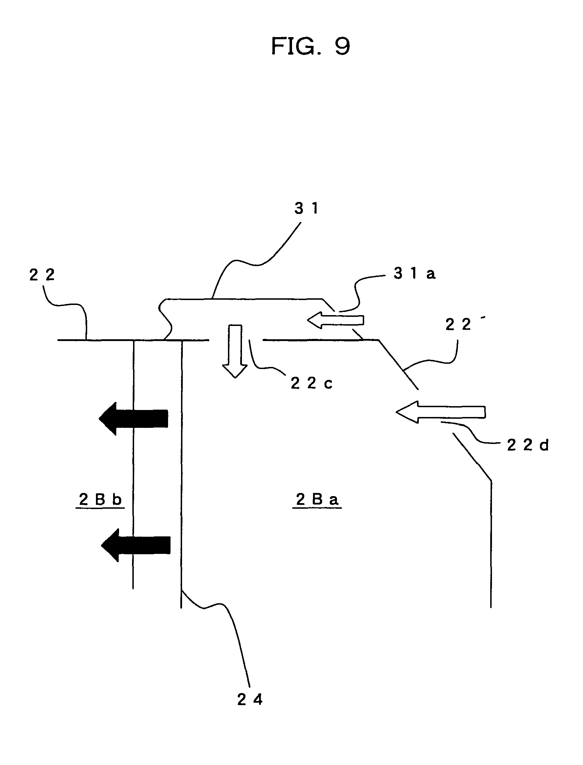

FIG. 9 is a transverse sectional view showing the essential part of an engine room constructed in accordance with a modification relative to each embodiment of the present invention, white arrows indicating the flow of air introduced and black arrows indicating the flow of hot air;
FIG. 10 is a perspective view showing a conventional construction machine;
FIG. 11 is a transverse sectional view showing the engine room of the conventional construction machine shown in FIG. 10, white arrows indicating the flow of air introduced and black arrows indicating the flow of hot air; and
FIG. 12 is a perspective view showing the cooling system of another conventional construction machine.

### BEST MODE FOR CARRYING OUT THE INVENTION

Embodiments of the present invention will hereinafter be described with reference to the drawings.

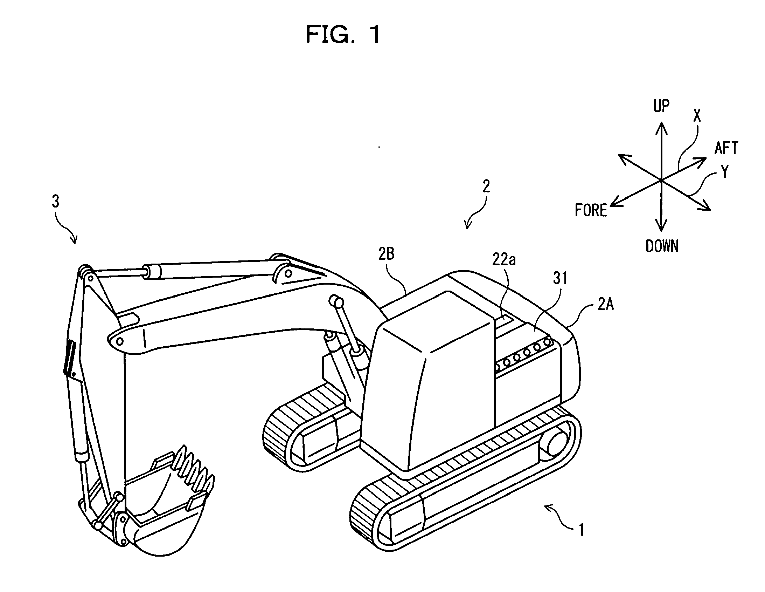

In Figs. 1 to 7, an arrow X indicates the fore-and-aft direction of a construction machine (also referred to as an engine room width direction), and an arrow Y indicates the right-and-left direction of the construction machine (also referred to as a fan axial-flow direction).

Also, in the following embodiments, a description will be given in the case where the present invention is applied to a hydraulic shovel as a construction machine.

### (1) First Embodiment

Initially, a construction machine, in which an engine room structure and a cooling system are used as a first embodiment of the present invention, will be described with reference to Fig. 1 where construction machine according to the first embodiment of the present invention is shown.

The construction machine in this embodiment is made up of a travel base 1, a revolving superstructure 2 revolvably disposed on the travel base 1, and an operating arm 3 extending from the revolving superstructure 2 to perform various operations. The revolving superstructure 2 includes a counterweight 2A disposed at its rear end, and an engine room 2B disposed in front of the counterweight 2A.

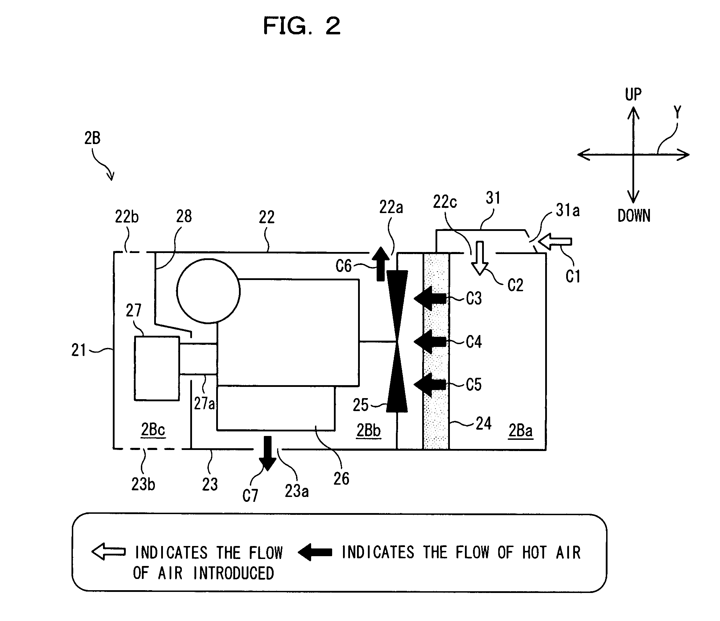

Next, the engine room 2B in the first embodiment of the present invention will be described with reference to Fig. 2. In the engine room 2B, an engine 26 is installed so its crank shaft is in the right-and-left direction Y, and an axial cooling fan 25 is disposed to the right side of the engine 26. The cooling fan 25 is installed so its axial direction coincides with the right-and-left direction Y, and is used to deliver cooling air into a cooling-air passage defined by the interior space of the engine room 2B. (In the embodiment shown in Fig. 2, cooling air is delivered toward the left side.) The cooling fan 25 shown in Fig. 2 is an engine-driven type mechanically coupled with the engine crank shaft, but may be a hydraulic type.

A cooling package 24, such as a radiator, an oil cooler, etc. , is installed on the upstream side (right side) in the axial-flow direction of the cooling fan 25. Also, a hydraulic pump 27 is mechanically coupled with the engine crank shaft and is installed on the downstream side (left side) in the axial-flow direction of the cooling fan 25.

The interior of the engine room 2B is partitioned between the cooling package 24 and engine 26, and also between engine 26 and hydraulic pump 27. That is, the interior of the engine room 2B is divided into a radiator room 2Ba where the radiator (cooling package 24) is installed, a main engine room 2Bb where the engine 26 and cooling fan 25 are installed, and a pump room 2Bc where the hydraulic pump 27 is installed.

An engine room main body 21 constituting the engine room 2B has a top wall surface 22 and a bottom wall surface 23. The top wall surface 22 facing the radiator room 2Ba is provided with an opening (engine room introduction opening) 22c, and the top wall surface 22 and bottom wall surface 23 facing the main engine room 2Bb are provided with openings (engine room discharge openings) 22a and 23a, respectively. Air (cooling air) is introduced into the interior of the engine room 2B through the introduction opening 22c by the cooling fan 25 and is passed through the cooling package 24. Thereafter, the cooling air is discharged out of the engine room through the engine room discharge openings 22a, 23a. The cooling air cools cooling water and the working oil of the hydraulic pump 27 when passing through the cooling package 24.

Note that part of the cooling air introduced into the engine room 2B flows into the pump room 2Bc through the gap between the connecting rod 27a (which extends between the engine 26 and hydraulic pump 27) and the partition wall 28 (which divides the engine room 2B into the main engine room 2Bb and pump room 2Bc) and is discharged from upper and lower discharge openings 22b, 23b provided in the pump room 2Bc.

Thus, the cooling system of the present invention is made up of the introduction opening 22c, the cooling-air passage (chambers 2Ba, 2Bb, and 2Bc within the engine room main body 21), the cooling package 24, the cooling fan 25, and the discharge openings 22a and 23a.

The discharge openings 22a and 23a are disposed at outer circumference of the cooling fan 25 (around the outer periphery of the cooling fan 25). That is, they are disposed at the same, or nearly the same, position as the cooling fan 25 with respect to the fan axial-flow direction (right-and-left direction) Y. In other words, the openings 22a and 23a are positioned directly below the cooling fan 25 with respect to the fan axial-flow direction Y.

The arrangement of the engine room discharge openings 22a, 23a is not limited to the aforementioned position, but they may be arranged relatively away from the cooling fan 25 in the fan axial-flow direction Y.

The cooling system of the present invention further includes an introduction duct 31, which is mounted as a cooling-air guiding member on the outside of the top wall surface 22 of the engine room 2B so as to cover the introduction opening 22c. This introduction duct 31 is constructed so that an upstream end in the fan axial-flow direction Y is open, while a downstream end in the fan axial-flow direction Y is closed except the introduction opening 22c. The introduction duct 31 guides cooling air inhaled by operation of the cooling fan 25 to the engine room introduction opening 22c from a side opposite to the engine room discharge opening 22a, and further guides to the radiator room 2Ba.

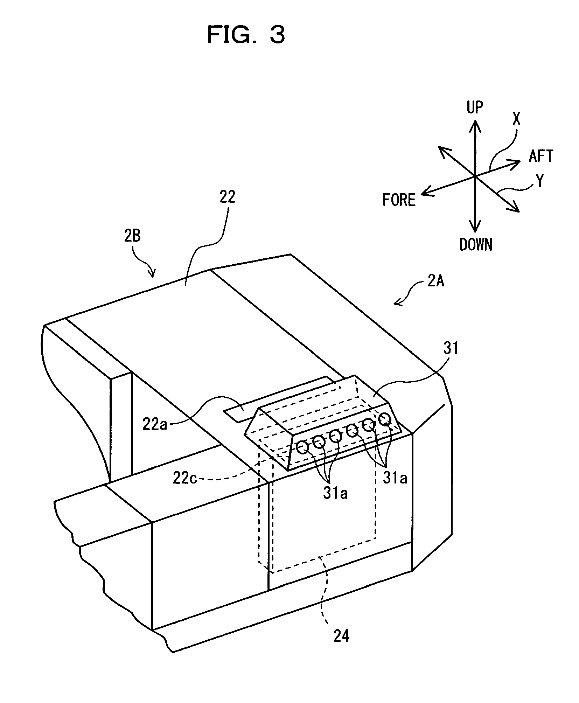

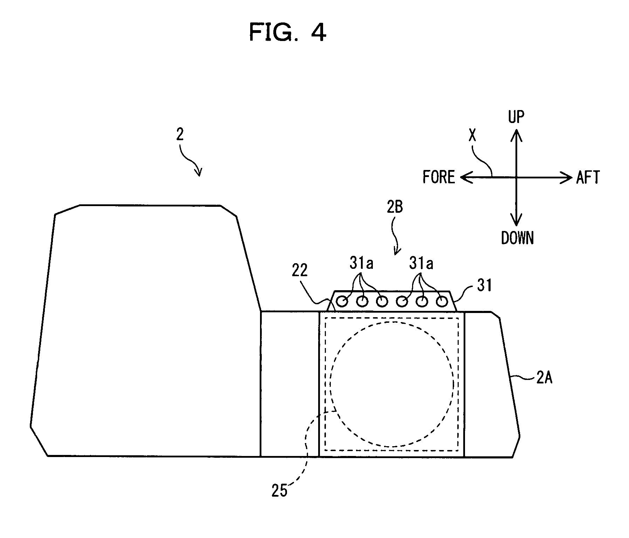

Now, the structure of the introduction duct 31, engine room introduction opening 22c, and engine room discharge opening 22a will be described in further detail with reference to Figs. 3 and 4.

Figs. 3 and 4 are diagrams showing the superstructure of the construction machine. Fig. 3 is a perspective view of the superstructure and Fig. 4 is a side view of the superstructure.

As shown in Fig. 3, the cooling-air introduction opening 22c and engine room discharge opening 22a are formed as slit-shaped openings, which are long in the fore-and-aft direction X of the construction machine. The duct 31 is in the form of approximately a box long in the engine room width direction X. With the duct 31 mounted on the top wall surface 22, the duct 31 is open to the engine room introduction opening 22c, and the upstream end in the fan axial-flow direction Y of the duct 31 has a plurality of openings 31a (discharge holes) relatively short in the engine room width direction X (e.g., circular openings in this example), which are juxtaposed along the engine room width direction X.

It is preferable to form the introduction duct 31 into a shape as long as possible on the upstream side in the fan axial-flow direction Y so that the introduction holes 31a are as away as possible from the engine room discharge opening 22a. The reason is that the drawing-in of hot air can be effectively suppressed.

Note that a plurality of rectifying plates extending in the fan axial-flow direction Y may be provided between introduction holes 31a. For example the rectifying plates are disposed along the line of axial-flow direction Y. With these rectifying plates, the cooling air introduced through the introduction holes 31a is prevented from flowing in the engine room width direction X and can flow smoothly toward the engine room introduction opening 22c. Therefore, as cooling air passes through the duct 31, pressure loss can be reduced.

Instead of having the introduction holes 31c, the upstream end of the duct 31 may have an opening relatively long in the engine room width direction X. As with the aforementioned case, rectifying plates may be provided so the inside of the duct 31 is divided in the engine room width direction X.

Since the engine room structure and cooling system of the first embodiment of the present invention are constructed as described above, cooling air flows as shown in Fig. 2.

That is, if the cooling fan 25 is operated, air (cooling air) is inhaled into the duct 31 through the introduction holes 31a and further into the radiator room 2Ba through the engine room introduction opening 22c, as indicated by arrows C1 and C2.

And the cooling air inhaled within the radiator room 2Ba passes through the cooling package 24 , as indicated by arrows C3 to C5. At this time, the cooling air cools the engine cooling water and pump working oil passing through the cooling package 24. And the air, exchanging heat with the engine cooling water and pump working oil and reaching a relatively high temperature, is delivered to the side of the engine 26 and discharged out of the engine room through the upper discharge opening 22a or lower discharge opening 23a, as indicated by arrows C6 and C7.

Typically, pressure loss becomes relatively great after the cooling package 24, so the flow of the cooling air sent out of the cooling fan 25 has main components in the centrifugal/revolving direction. That is, most of the cooling air sent out of the cooling fan 25 will flow in approximately the centrifugal direction, as indicated by the arrow C6.

Hence, in the cooling system of the first embodiment, the upper opening 22a of the two engine room discharge openings 22a and 23a is provided in a portion of the top wall surface where the cooling air from the cooling fan 25 strikes as indicated by the arrow C6. Therefore, the cooling air sent out of the cooling fan 25 is smoothly discharged from the engine room 2B through the engine room discharge opening 22a without undergoing direct resistance.

Thus, the engine room discharge opening 22a is arranged at outer circumference of the cooling fan 25 in order to enhance the discharge efficiency of cooling-air to be discharged from the engine room 2B. As a result, the engine room discharged opening 22a is arranged near the engine room introduction opening 22c, but since the introduction duct 31 is mounted so as to cover the engine room introduction opening 22c, the circulating flow before and after the cooling package 24 is prevented. That is, the cooling air of relatively high temperature after the cooling package 24 is prevented from being drawn in the radiator room 2Ba.

That is, by providing the duct 31, the position at which air is introduced is moved to the duct introduction holes 31a farther away from the engine room discharge opening 22a than the engine room introduction opening 22c. The cooling air is inhaled in a direction opposite to the engine room discharge opening 22a with respect to the fan axial-flow direction Y. In this way, the hot air discharged form the engine room discharge opening 22a can be prevented from being drawn in the radiator room 2Ba. In addition, even in view of revolution of the revolving superstructure 2, an upper space region where hot air is discharged from the engine room discharge opening 22a is separated from a side space region where cooling air is inhaled through the duct introduction holes 31a. Therefore, even during revolution of the revolving superstructure 2, the drawing-in of hot air can be prevented.

Thus, cooling air to be supplied to the cooling package 24 is prevented from rising in temperature because of the drawing-in of hot air, so the cooling efficiency of the cooling package 24 can be enhanced and engine cooling water and pump working oil can be effectively cooled. As a result, the cooling package 24 can be made structurally simpler.

### (2) Second Embodiment

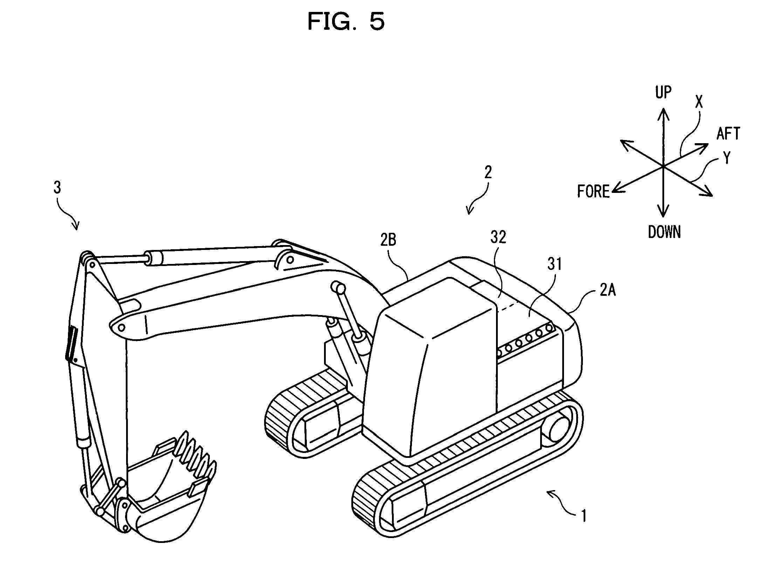

Figs. 5 to 7 show an engine room structure and a cooling system in accordance with a second embodiment of the present invention. In the figures, the same reference numerals will be applied to the same parts as the first embodiment. Therefore, a detailed description of the same parts will be omitted.

As shown in Fig. 5, a construction machine, equipped with the engine room structure and cooling system of the second embodiment, is made up of a travel base 1, a revolving superstructure 2, and an operating arm 3.

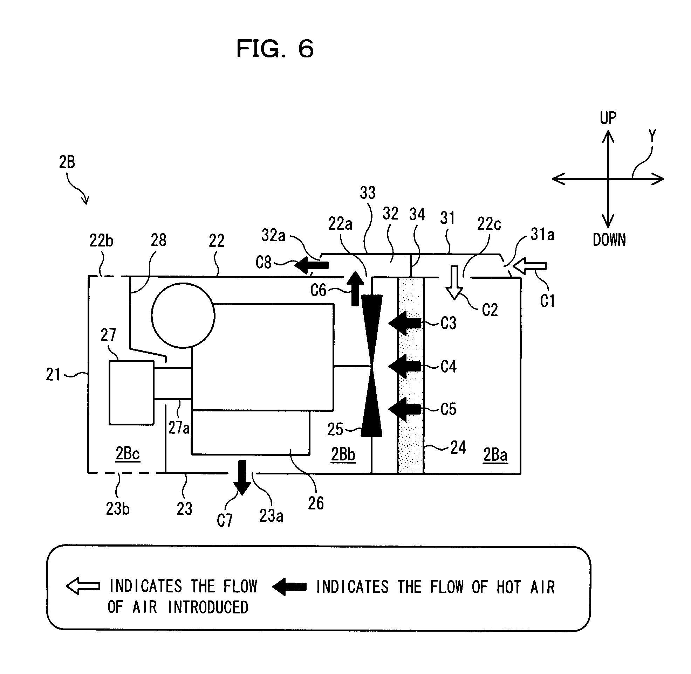

The engine room structure is constructed as shown in Fig. 6. The figure is a transverse sectional view of the engine room. The engine room 2B includes a cooling-air introduction opening 22c, cooling-air passages 2Ba, 2Bb, and 2Bc defined by the interior space of the engine room 2B, and engine room discharge openings 22a, 23a. The engine room 2B further includes a cooling package 24, a cooling fan 25, a first duct (introduction duct) 31 provided to cover the engine room introduction opening 22c, and a second duct 32 provided to cover the engine room discharge opening 22a. These components constitute the cooling system of the second embodiment of the present invention.

That is, in the engine room structure and cooling system of the second embodiment, a discharge duct (a second duct, cooling-air deflecting member) 32 provided for the engine room discharge opening 22a is added to the first embodiment.

This duct 32 is mounted on the outside of the top wall surface 22 of the engine room so as to cover the upper engine room discharge opening 22a. The upstream end portion in the fan axial-flow direction Y of the discharge duct 32 is closed except discharge opening 22a, while the downstream end portion is open. The cooling air discharged upward from the engine room 2B through the engine room discharge opening 22a is deflected by the duct 32 and is discharged from openings (discharge holes) 32a to a side opposite to the engine room introduction opening 22c and introduction duct 31 with respect to the fan axial-flow direction Y.

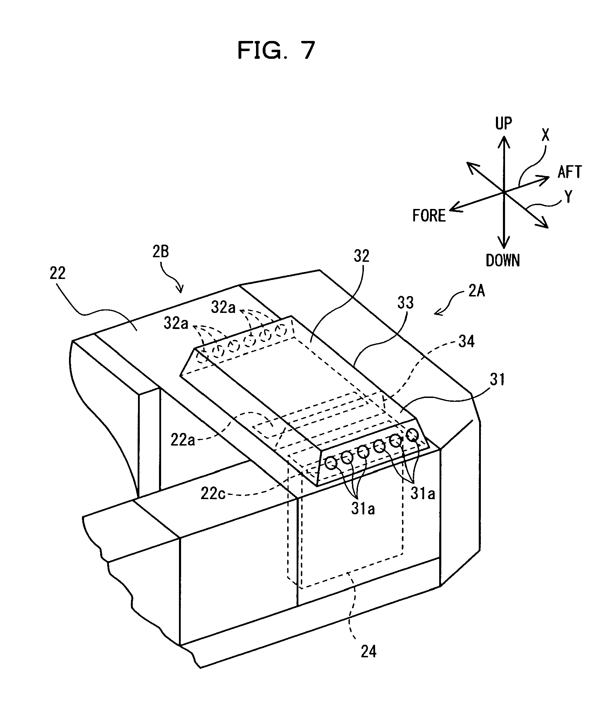

Now, the structure of the ducts 31, 32 will be described in further detail with reference to Fig. 7. The figure is a perspective view showing the ducts 31, 32.

The introduction duct 31 and discharge duct 32 are formed integrally with a duct cover 33. The duct cover 33 is formed into the shape of approximately a box and mounted on the top wall surface 22 of the engine room so as to cover the engine room introduction opening 22c and engine room discharge opening 22a. With the duct cover 33 mounted on the top wall surface 22, the opposite sides facing the engine room introduction opening 22c and engine room discharge opening 22a are open.

The duct cover 33 is provided with a partition wall 34 by which the interior space of the duct cover 33 is divided between the engine room introduction opening 22c and engine room discharge opening 22a. The partition wall 34 and the upstream portion of the duct cover 33 from the partition wall 34 constitute the introduction duct 31. Similarly, the partition wall 34 and the downstream portion of the duct cover 33 from the partition wall 34 constitute the discharge duct 32. That is, as described above, the introduction duct 31 and discharge duct 32 are constructed as one body.

With the duct cover 33 mounted on the top wall surface 22 of the engine room, the upstream end face in the fan axial-flow direction Y of the duct cover 33 has a plurality of openings (introduction holes) 31a relatively short in the engine room width direction X (e.g., circular openings in this example), which are juxtaposed along the engine room width direction X. Likewise, the downstream end face in the fan axial-flow direction Y of the duct cover 33 has a plurality of openings (discharge holes) 32a relatively short in the engine room width direction X (e.g., circular openings in this example), which are juxtaposed along the engine room width direction X.

Note that a plurality of rectifying plates (second rectifying plate) extending in the fan axial-flow direction Y may be provided between the plurality of discharge holes 32a. With these rectifying plates, cooling air is prevented from flowing in the engine room width direction X and can flow smoothly toward the discharge holes 32a. Therefore, as cooling air passes through the duct 32, pressure loss can be reduced.

Also, instead of having the discharge holes 32a, the upstream end face of the duct 32 may have an opening relatively long in the engine room width direction X. As with the aforementioned case, rectifying plates may be provided so the inside of the duct 32 is divided in the engine room width direction X.

It is preferable to form the discharge duct 32 into a shape as long as possible on the downstream side in the fan axial-flow direction Y so that the discharge holes 32a are as away as possible from the introduction holes 31a of the introduction duct 31. The reason is that the drawing-in of hot air can be effectively suppressed.

Since the remaining structure is the same as the first embodiment, a description of the same parts will be omitted.

The engine room structure and cooling system of the second embodiment of the present invention are constructed as described above, so the cooling air of relatively high temperature discharged upward from the engine room discharge opening 22a is deflected by the discharge duct 32 and discharged out of the engine room toward a side opposite to the engine room introduction opening 22c and introduction duct 31 with respect to the fan axial-flow direction Y through the downstream discharge holes 32a of the discharge duct 32, as indicated by an arrow C8 in Fig. 6.

Thus, by providing the discharge duct 32, the position at which cooling air is discharged is farther away from the introduction holes 31a of the introduction duct 31 than the engine room discharge opening 22a. The cooling air is discharged from the duct discharge holes 32a in a direction opposite from the direction where air is inhaled through the duct introduction holes 31a. Therefore, the hot air discharged form the engine room 2B can be more effectively prevented from being drawn in the radiator room 2Ba.

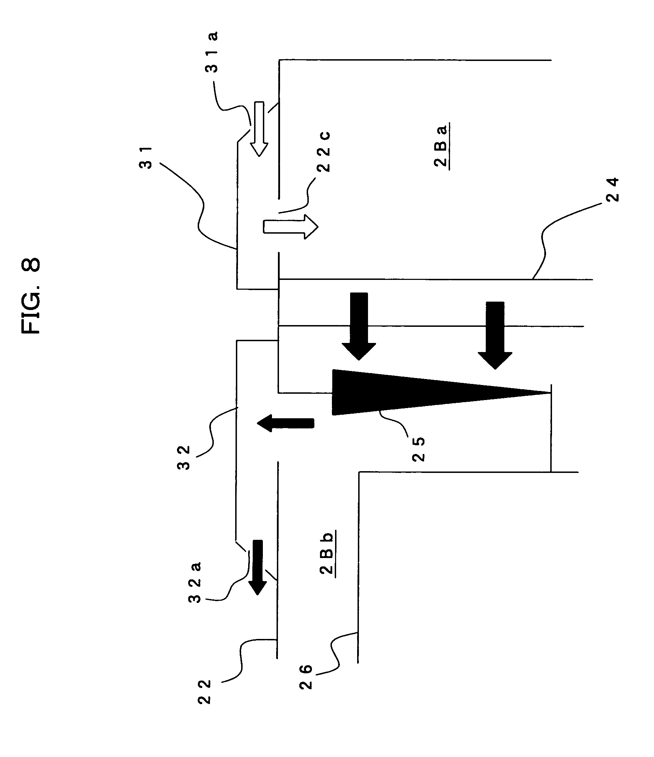

In the second embodiment, the introduction duct 31 and discharge duct 32 are constructed as one body, as described above. However, as shown in Fig. 8, the introduction duct 31 and discharge duct 32 may be separately constructed.

### (3) Others

While the present invention has been described with reference to the preferred embodiments thereof, the invention is not to be limited to the details given herein, but may be modified within the scope of the invention hereinafter claimed.

For example, in the aforementioned embodiments, the upper engine room discharge opening 22a is arranged at nearly the same position as the cooling fan 25 with respect to the fan axial-flow direction Y. However, as with the lower engine room discharge opening 23a, the upper engine room discharge opening 22a may be arranged away from the cooling fan 25 in the fan axial-flow direction Y. Conversely, the lower engine room discharge opening 23a may be arranged at nearly the same position as the cooling fan 25.

In addition, the aforementioned embodiments may further contain an inclined surface 22' having an introduction opening 22d, at the upper portion of the wall surface 21 facing the radiator room 2Ba.

## Claims

1. An engine room structure in a construction machine which has an interior space functioning as a cooling-air passage, an introduction opening (22c) for introducing cooling air, and a discharge opening (22a) for discharging said cooling air, and also contains a cooling package (24) and a cooling fan (25) for passing said cooling air through said cooling package (24), said engine room structure comprising:
a cooling-air guiding member (31), mounted on a wall surface (21) forming an engine room, for guiding said cooling air to said introduction opening (22c) from a side opposite to said discharge opening (22a) with respect to an axial flow direction (Y) of said cooling fan (25).

2. The engine room structure as set forth in claim 1, wherein a rectifying plate is provided along said axial f low direction (Y) between said cooling-air guiding member (31) and said wall surface (21).

3. The engine room structure as set forth in claim 1 or 2, further comprising:
a cooling-air deflecting member (32), mounted on said wall surface (21), for deflecting said cooling air discharged from said discharge opening (22a), to a side opposite to said introduction opening (22c) with respect to the axial flow direction (Y) of said cooling fan (25).

4. The engine room structure as set forth in claim 3, wherein a second rectifying plate is provided along said axial flow direction (Y) between said cooling-air deflecting member (32) and said wall surface (21).

5. The engine room structure as set forth in any one of claims 1 through 4, wherein said discharge opening (22a) is arranged at outer circumference of said cooling fan (25).

6. A cooling system in a construction machine which has a cooling-air passage formed as an interior space of an engine room, an introduction opening (22c) and discharge opening (22a) formed in a wall surface (21) forming said engine room, a cooling package (24) installed within said cooling-air passage, and a cooling fan (25) installed between said introduction opening (22c) and said discharge opening (22a) for passing said cooling air through said cooling package (24), said cooling system comprising:
a cooling-air guiding member (31), mounted on a wall surface (21) forming said engine room, for guiding said cooling air to said introduction opening (22c) from a side opposite to said discharge opening (22a) with respect to an axial flow direction (Y) of said cooling fan (25).

7. The cooling system as set forth in claim 6,
wherein a rectifying plate is provided along said axial flow direction (Y) between said cooling-air guiding member (31) and said wall surface (21).

8. The cooling system as set forth in claim 6 or 7, further comprising:
a cooling-air deflecting member (32), mounted on said wall surface (21), for deflecting said cooling air discharged from said discharge opening (22a), to a side opposite to said introduction opening (22c) with respect to the axial flow direction (Y) of said cooling fan (25).

9. The cooling system as set forth in claim 8, wherein a second rectifying plate is provided along said axial flow direction (Y) between said cooling-air deflecting member (32) and said wall surface (21).

10. The cooling system as set forth in any one of claims 6 through 9, wherein said discharge opening (22a) is arranged at outer circumference of said cooling fan (25).
